# EUROPEAN PATENT APPLICATION

(11) **EP 1 916 147 A1**
(43) Date of publication of application: **30.04.2008**
(21) Application number: 07020798.0
(22) Date of filing: 24.10.2007
(51) Int. Cl.: B60K 25/06, F16D 1/10, B60P 3/16

(54) **Automatic coupling/uncoupling system for torque transmission units in trucks having demountable bodies**

(30) Priority: 24.10.2006 IT MI20062043
(71) Applicant: Pris-Mag S.r.l., 20059 Vimercate MI (IT)
(72) Inventor: Sala, Alessandro, 20059 Oreno di Vimercate (MI) (IT)
(74) Representative: Premru, Rok

(57) **Abstract**

It is hereby disclosed a truck (1) comprising a chassis (2), extending along a longitudinal axis (X), which defines a base plane (n); means (3) for raising and lowering a demountable body (12) with no change in the vehicle attitude, means (4) for horizontally displacing a demountable body (12) on said base plane (X), between a position in which the demountable body (12) is anchored to the chassis (2) of the truck and a position in which said body (12) is susceptible of being raised; an element (5) rotating about an axis of rotation (X1) parallel to said longitudinal axis (X), said rotating element (5) being integrally connected to a power takeoff (30) and having a plurality of projecting claws (51) circumferentially arranged about said axis of rotation (X1) on a plane orthogonal to said axis of rotation (X1), wherein the projecting claws (51) are substantially and/or generally sawtooth or right trapezoidal in shape.

## Description

There is disclosed herein an automatic torque coupling/uncoupling system for torque transmission units in trucks having demountable bodies.

Particularly, there is disclosed herein a truck with a demountable concrete mixer, having an automatic torque transmission coupling/uncoupling system between the power takeoff on a truck and the hydraulic pump on a mixer.

The use of trucks with interchangeable bodies having hydraulic power consuming units with a mechanical torque transmission device is known in the art.

For instance, it is known to use demountable concrete mixers powered by a hydraulic pump which is in turn driven by a rotating shaft.

In a prior art technique, the power consuming units on the interchangeable bodies may be mechanically controlled by a power takeoff controlled by the truck engine.

In this case, each time the body is mounted to the truck, the power takeoff on the truck has to be mechanically connected to the hydraulic power consuming unit on the body.

Likewise, each time the body is demounted, the mechanical transmission system between the power takeoff on the truck and the hydraulic power consuming unit on the body has to be disconnected.

In prior art, connection between the power takeoff and the body is provided by a claw clutch, in which the stationary part is integral with the body, and the movable part is connected to the power takeoff by means of a joint, typically a universal joint.

Connection and disconnection of the clutch are wholly manual operations, to be carried out while the body is still.

Upon connection, the universal joint is aligned with the power takeoff, the claws of the movable part and stationary part of the clutch are fitted one into the other, and the two parts of the clutch are mutually locked (e.g. by screw tightening).

Disconnection is effected by a reverse process.

Manual connection and disconnection of the clutch that connects the power takeoff to the power consuming unit of the body requires some skill by the operator for proper coupling of the clutch, and involves longer times for body mounting-demounting.

Therefore, the object of this invention is to propose a solution to prior art problems and particularly to those set out hereinbefore.

This object is fulfilled by a truck as defined in claim 1, a body as defined in claim 4 and a clutch as defined in claim 8.

Further advantages may be obtained by the additional features of the dependent claims.

A possible embodiment of a truck, a body and a clutch as defined in the attached claims will be described hereafter with reference to the accompanying drawings, in which:

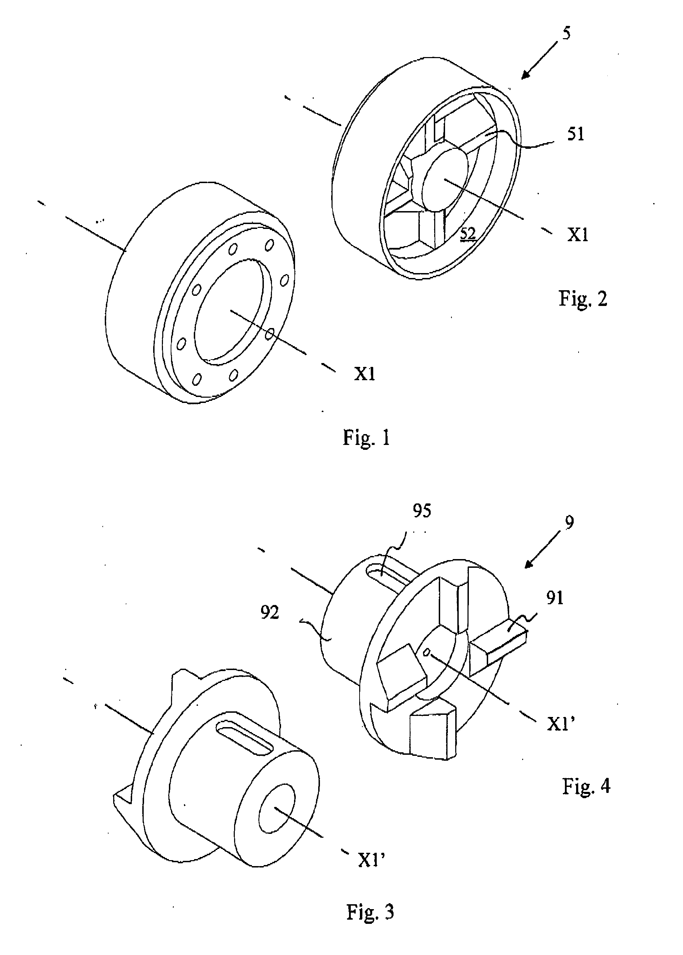

- Fig. 1 and Fig. 2 are two different perspective views of the stationary part of a claw clutch;
- Fig. 3 and Fig. 4 are two different perspective views of the movable part of a claw clutch, which is designed to be coupled with the stationary part as shown in Fig. 1 and Fig. 2;

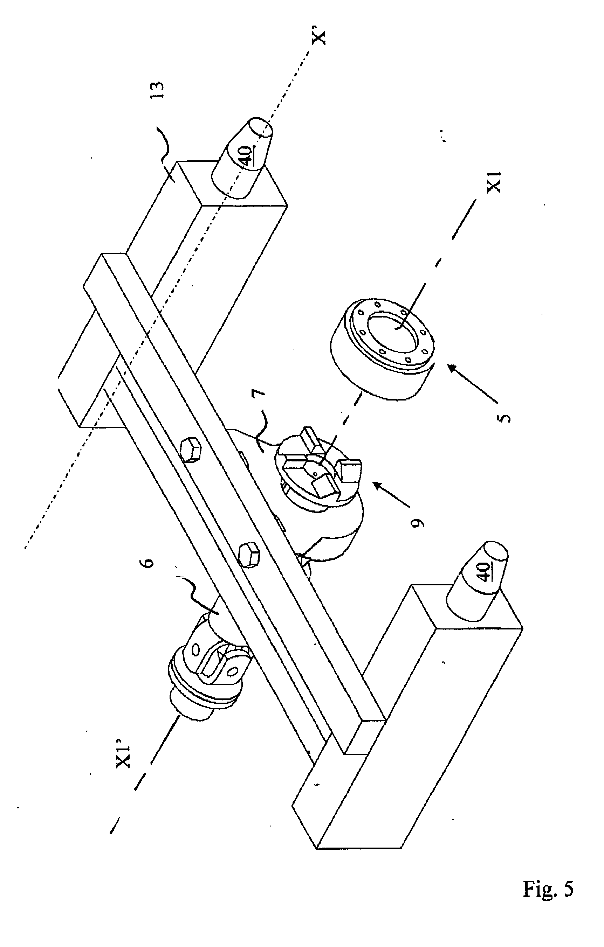

- Fig. 5 is a perspective view that shows a detail of the body structure, the semi transmission, the movable part of the clutch and the stationary part of the clutch when the body is not anchored to the truck;

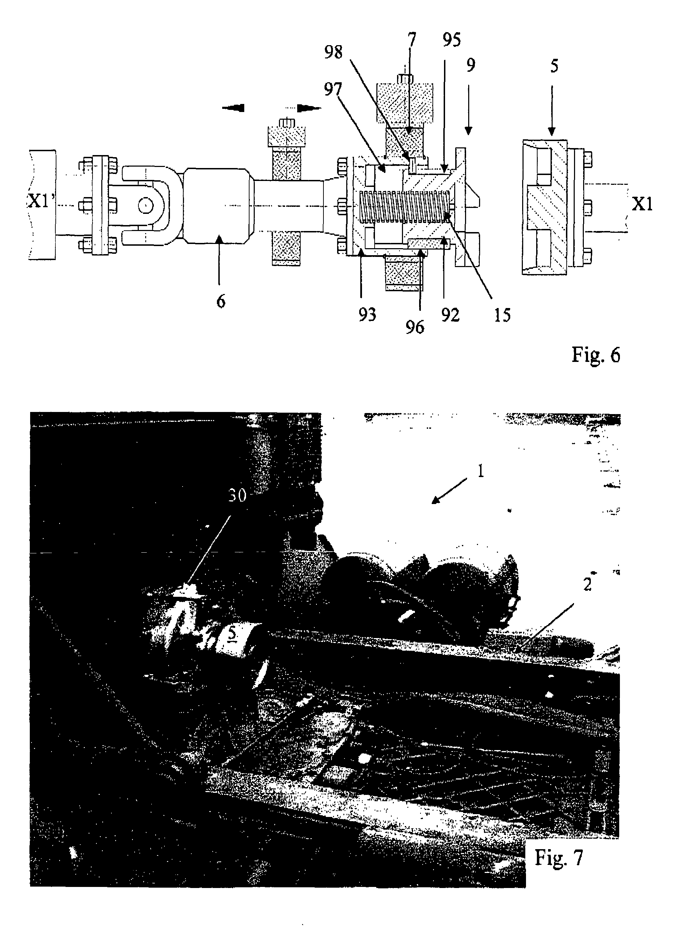

- Fig. 6 is a partly sectional side view of the same detail of Fig. 5;
- Fig. 7 is a schematic view of a truck for use with demountable bodies, including an engine power takeoff and a stationary part of a clutch as shown in Fig. 1 and Fig. 2;

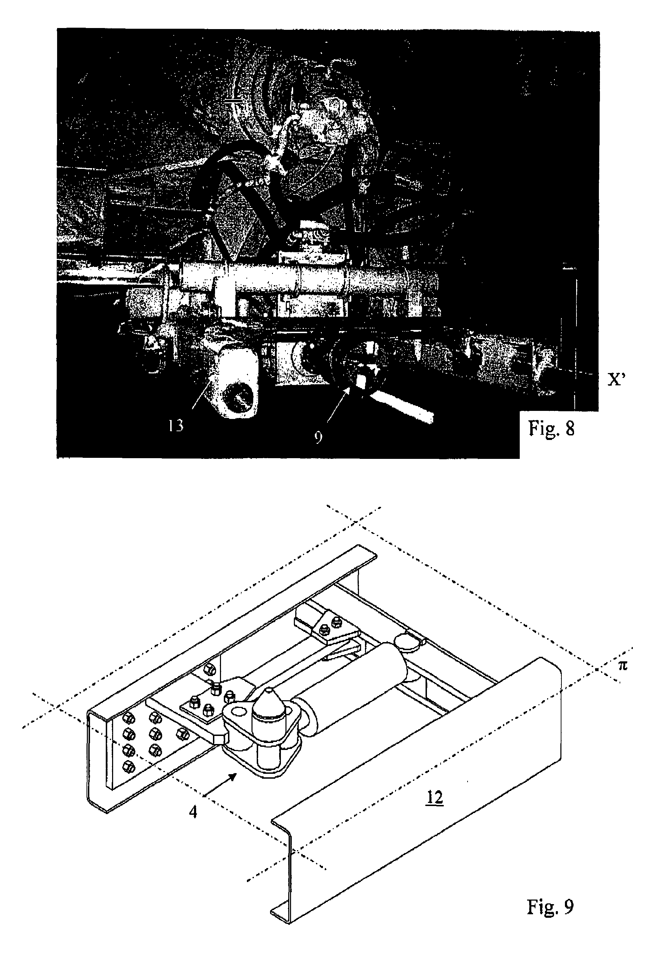

- Fig. 8 is a schematic view of a demountable body, having a hydraulic pump thereon, with a movable part of a clutch mounted thereon, such as the one shown in Fig. 3 and Fig. 4;
- Fig. 9 shows a possible embodiment of the means for horizontally displacing the body on the chassis of the truck; and

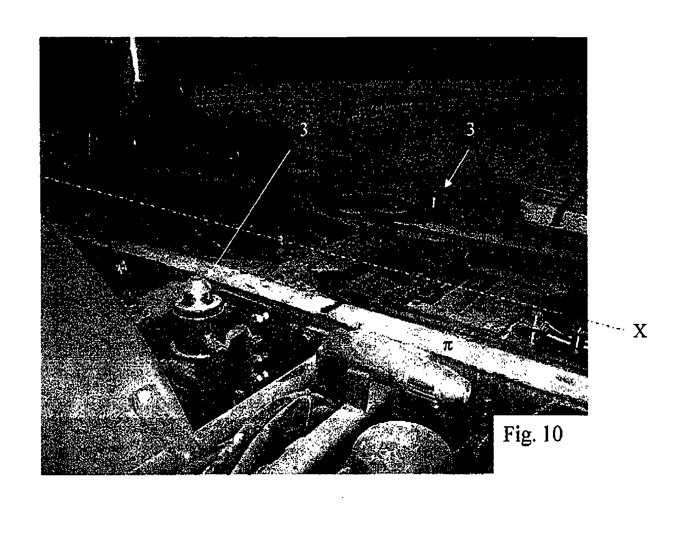

- Fig. 10 shows some of the means provided on a truck for raising the body and coupling the body after horizontally displacing the body on the chassis of the truck.

The accompanying drawings show a truck 1 that comprises a chassis 2, extending along a longitudinal axis X, which defines a base plane n for receiving a demountable body 12, such as a concrete mixer.

The truck is equipped with means 3 for raising and lowering the demountable body 12 with no change in the vehicle attitude.

The means 3 for raising and lowering the demountable body with no change in the vehicle attitude are known per se and will not be further described herein.

The truck 1 is further equipped with means 4 for horizontally displacing the demountable body 12 on the base plane n along the longitudinal axis X, between a position in which the demountable body 12 is anchored to the chassis 2 of the truck and a position in which the body is susceptible of being raised.

The means 4 for displacing the body 12 along the longitudinal axis X are also known per se and will not be further described herein.

The structure 13 and the body 12 can be anchored to the chassis 2 of the truck using conventional means, such as brackets and pins.

In the preferred embodiment, the means for displacing the body 12 along the longitudinal axis X are separate from the means for raising and lowering the body 12.

An element 5 is provided, that rotates about an axis of rotation X1 parallel to the longitudinal axis X of the truck, and is integral with a power takeoff 30.

This rotating element 5 has a plurality of projecting claws 51 cincumferentially arranged about the axis of rotation X1 on a plane orthogonal to the plane of rotation X1.

The rotating element 5 is the stationary part of a one-way claw clutch.

An important feature of the rotating element 5 is that the projecting claws 51 are substantially and/or generally sawtooth or right trapezoidal in shape.

This conformation optimizes torque transmission while reducing axial stresses.

In the embodiment of the figures, the rotating element 5 has a tubular portion 52 with projecting claws 51 therein.

The tubular portion 52 facilitates mutual coupling of the stationary part and the movable part of the clutch, particularly when the two parts of the clutch are offset.

In a possible embodiment (not shown), the rotating element 5 is axially movable along the axis of rotation X1 relative to the chassis, against elastic return means.

This feature provided perfect coupling of the two parts of the clutch.

The demountable body 12 of the truck has a support frame 13 extending along a longitudinal axis X' - which is designed to be coupled with a chassis 2 of a truck 1.

The support frame 13 of the body 12 has a plurality of receptacles for the body to be raised, with no change of the vehicle attitude, using rods or vertical pins.

A plurality of anchor means 40 may be provided, such as brackets integral with the frame 13 of the body 12, which are aligned parallel to the longitudinal axis X' of the body.

An element 9 is further provided, that rotates about an axis of rotation X1' parallel to the longitudinal axis X of the body, and is connected to a driven shaft 6 mounted to at least one support 7 integral with the support frame 13 of the body 12.

This rotating element 9 has a plurality of projecting claws 91 cincumferentially arranged about the axis of rotation X1' on a plane orthogonal to the plane of rotation X1'.

In the embodiment of the figures, the driven shaft 6 is connected to the hydraulic power consuming unit by means of a universal joint (semi transmission).

The rotating element 9 is the movable part of a claw clutch.

An important feature of the rotating element 9 is that the projecting claws 91 are also substantially and/or generally sawtooth or right trapezoidal in shape.

This claw shape allows easier coupling of the two parts of the clutch when the claws are not in the right mutual position or when one of the two parts of the clutch is rotated relative to the other part.

The support 7 of the driven shaft 6 may be a swivel bearing support or a support with damping material (such as resin).

This solution provides absorption of all the shocks acting upon the transmission system which includes the driven shaft 6.

In the embodiment of the figure, the rotating element 9 is axially movable along the axis of rotation X1' - relative to the driven shaft - against elastic return means 15.

This solution allows proper reliable coupling between the two parts of the clutch, while ensuring proper compression between the two parts of the clutch.

For this purpose, the movable rotating element 9 has a hub 92 slideably fitting into a hollow element or bushing 93.

In the embodiment of the figure, the hub 92 has a pair of (diametrically opposite) longitudinal channels (95) in which keys are received, which are coupled with corresponding channels 97 formed in the hollow element 93.

The channels 97 act as guides for axial translation of the hub 92 whose stroke obviously depends on the length of the channels 97.

Safety means 98 are also provided, such as a dowel, to prevent the spring 15 from causing the movable rotating element 9 to be accidentally ejected from the hollow element 93.

In a possible embodiment, the elastic return means include a helical spring, partly inserted in a blind hole formed in the hub 92, which is designed to operated under compression.

Using the above clutch system, the two rotating members 5, 9 that form the clutch may be coupled and uncoupled upon mounting and demounting of the body 12 on the truck 1.

The possibility of relative displacement of one of the two members 5, 9 of the clutch along the axis of rotation allows proper coupling of the clutch.

It shall be noted that the claws of the rotating elements 5 and 9 may also have shapes other than that shown herein, provided that the clutch formed thereby is a one-way clutch.

For easier connection between the claws 51 and 91 of the two rotating elements 5, 9 it is further preferable that coupling occurs with an adequate clearance.

## Claims

1. A truck (1) comprising:
- a chassis (2), extending along a longitudinal axis (X), which defines a base plane (n);
- means (3) for raising and lowering a demountable body (12) with no change in the vehicle attitude,
- means (4) for horizontally displacing a demountable body (12) on said base plane (X), between a position in which the demountable body (12) is anchored to the chassis (2) of the truck and a position in which said body (12) is susceptible of being raised;
- an element (5) rotating about an axis of rotation (X1) parallel to said longitudinal axis (X), said rotating element (5) being integrally connected to a power takeoff (30) and having a plurality of projecting claws (51) circumferentially arranged about said axis of rotation (X1) on a plane orthogonal to said axis of rotation (X1);
**characterized in that** said projecting claws (51) are substantially and/or generally sawtooth or right trapezoidal in shape.

2. A truck as claimed in claim 1, wherein said rotating element (5) has a tubular portion (52) containing said projecting claws (51).

3. A truck as claimed in claim 1 or 2, wherein said rotating element (5) is axially movable along said axis of rotation (X1) against elastic return means (15).

4. A demountable body (12) for a truck, comprising:
- a support frame (13) extending along a longitudinal axis (X');
- a plurality of receptacles integral with said support frame (13), for said body (12) to be raised, with no change of the vehicle attitude, using rods or vertical pins;
- fastener means for anchoring said body to the chassis of a truck;
- an element (9) rotating about an axis of rotation (X1') parallel to said longitudinal axis (X'), said rotating element (5) being connected to a driven shaft (6) mounted to at least one support (7) integral with said support frame (13) of said body (12), said rotating element (9) having a plurality of projecting claws (91) circumferentially arranged about said axis of rotation (X1') on a plane orthogonal to said axis of rotation (X1'), wherein said projecting claws (91) are substantially sawtooth or right trapezoidal in shape.

5. A body as claimed in claim 4, wherein said support (7) is a vibration damping support.

6. A body as claimed in claim 4 or 5, wherein said rotating element (9) is axially movable along said axis of rotation (X1') relative to said driven shaft (6) against elastic return means (15).

7. A combination of a truck as claimed in any one of claims 1 to 3, and a body as claimed in any one of claims 4 to 6.

8. A one-way claw clutch, comprising:
- a first rotating element (5), adapted to rotate about an axis (X1);
- a second rotating element (9), connected to a shaft (6), which is adapted to rotate about an axis (X1') and to axially move along said axis (X1') relative to said shaft (6) against elastic return means (15).

9. A clutch as claimed in claim 8, wherein said second movable rotating element (9) has a hub (92) slideably fitting into a hollow element (93) and wherein said elastic return means (15) are received in a blind hole formed in the hub (92), said elastic means (15) operating under compression.

10. A clutch as claimed in claim 9, wherein said hub (92) has a pair of longitudinal channels (95) in which keys (96) are received, which are coupled with corresponding channels (97) formed in said hollow element (93).

11. A clutch as claimed in claim 10, further comprising means (7) for damping the vibrations of said hollow element (93).
